(19) Europäisches Patentamt / European Patent Office / Office européen des brevets

(11) **EP 4 618 403 A1**

(12) **DEMANDE DE BREVET EUROPEEN**

(43) Date de publication:
**17.09.2025 Bulletin 2025/38**

(21) Numéro de dépôt: **24162979.9**

(22) Date de dépôt: **12.03.2024**

(51) Classification Internationale des Brevets (IPC):
*H02P 8/02* (2006.01)   *H02P 8/16* (2006.01)
*H02P 8/34* (2006.01)   *H02P 8/38* (2006.01)
*G04C 3/14* (2006.01)

(52) Classification Coopérative des Brevets (CPC):
**H02P 8/02; G04C 3/143; H02P 8/16; H02P 8/34; H02P 8/38**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **Richemont International S.A.**
**1752 Villars-sur-Glâne (CH)**

(72) Inventeurs:
• **Ragot, Patrick**
  **2052 Fontainemelon (CH)**

• **Taghezout, Daho**
  **1110 Morges (CH)**
• **Muller, Jonathan**
  **2515 Prêles (CH)**
• **Fiaccabrino, Jean-Charles**
  **1421 Grandevent (CH)**
• **Kunz, Yves**
  **3065 Bolligen (CH)**
• **Henneton, Loïc**
  **1400 Nivelles (BE)**

(74) Mandataire: **Micheli & Cie SA**
**Rue de Genève 122**
**Case Postale 61**
**1226 Genève-Thônex (CH)**

(54) **PROCÉDÉ ET DISPOSITIF DE COMMANDE D'UN MOTEUR PAS-À-PAS**

(57) Procédé de pilotage et d'asservissement d'un moteur pas-à-pas (2) de mouvement d'horlogerie électronique, le moteur pas-à-pas (2) comprenant un rotor (23), un stator (22) et une bobine (21), la bobine (21) recevant d'un dispositif de commande (1) associé au moteur pas-à-pas (2) des impulsions motrices (10) pour faire tourner ledit rotor (23) lorsque ledit dispositif de commande (1) est mis sous tension, ledit procédé comprenant les étapes de : envoyer au moteur pas-à-pas (2) une impulsion motrice (10) ; déterminer la tension induite ($U_i$) dans la bobine (21) durant cette impulsion motrice (10) ; interrompre l'impulsion motrice (10) lorsque la détermination de la tension induite ($U_i$) indique que la tension induite ($U_i$) passe par un seuil de tension induite ($U_{iseuil}$) prédéterminé; après un délai de stabilisation ($\Delta tstab$) mesuré à partir de la coupure de l'impulsion motrice (10), déterminer le flux magnétique ($\Phi$) à travers la bobine (21), et déterminer sur la base de la valeur de flux magnétique ($\Phi$) calculée si le moteur pas-à-pas (2) a effectué un pas suite à l'impulsion motrice (10) ; si le moteur pas-à-pas (2) n'a pas effectué de pas, exécuter une instruction de rattrapage comprenant l'envoi par le dispositif de commande (1) au moteur pas-à-pas (2) d'impulsion de rattrapage ayant une énergie plus importante que l'impulsion motrice (10). Dispositif de commande (1) d'un moteur pas-à-pas (2) de mouvement d'horlogerie électronique, configuré pour la mise en oeuvre du procédé selon la revendication 1 par le dispositif de commande (1).

Figure 2

**Description**

La présente invention concerne un procédé et un dispositif de commande d'un moteur pas-à-pas pour mouvement à quartz. La présente invention concerne en particulier un procédé et un dispositif de commande d'un moteur pas-à-pas de mouvement à quartz pour pièce d'horlogerie électronique à affichage analogique.

Dans les pièces d'horlogerie électroniques à affichage analogique, il est d'usage courant de trouver un moteur pas-à-pas pour convertir les impulsions électriques issues d'une base de temps à quartz en mouvement mécanique pour entraîner les aiguilles ou autres organes d'affichage de l'heure. Le système est alimenté par une source d'énergie électrique, généralement une pile de petites dimensions qu'il faudra remplacer périodiquement. Pour économiser l'énergie livrée par la pile et donc la faire durer le plus longtemps possible, il est important de minimiser la consommation d'énergie du système. Pour cette raison, on cherche à employer des impulsions motrices ayant une énergie suffisante pour piloter le moteur dans des conditions normales, mais qui peuvent être inadéquates pour tourner le rotor dans des conditions non-idéales, par exemple en cas de chocs, de champ magnétique externe, de pilotage en contre-phase inattendu, etc.

Pour cette raison, le dispositif de commande du moteur comprend typiquement un circuit d'asservissement avec un détecteur de pas et un contrôleur qui déclenche une instruction de correction, voire de rattrapage, après la détection d'un pas raté. De tels dispositifs sont par exemple décrits dans les documents EP 1 032 118 A1, EP 0 135 104 A1, EP 0 024 737 A1, EP0 021 320 A1, EP 0 140 089 A1 et EP 0 057 663 A1.

Le dispositif de commande peut également utiliser la détection de pas à des fins énergétiques, notamment pour interrompre une impulsion motrice quand le pas est détecté, comme décrit par exemple dans EP 0 135 104 A1, CH 640 999 G, CH 647 129 G A3 et EP 0 057 663 A1, ou pour réguler/ajuster une énergie de référence des impulsions motrices en fonction de la fréquence de pas ratés, comme décrit dans EP 0 135 104 A1 et EP 0 057 663 A1.

Il existe cependant un besoin de réduire encore la consommation d'énergie électrique des mouvements horlogers électroniques, notamment du dispositif de commande du moteur pas-à-pas.

Un but de la présente invention est de proposer un dispositif de commande d'un moteur pas-à-pas de mouvement d'horlogerie électronique et un procédé de pilotage et d'asservissement correspondant dont la consommation d'énergie est optimisée.

Un autre but de la présente invention est de proposer un procédé de pilotage et d'asservissement et un dispositif de commande d'un moteur pas-à-pas de mouvement d'horlogerie électronique fiables, permettant un affichage précis de l'heure.

Ces buts et d'autres avantages sont atteints par un procédé de pilotage et d'asservissement d'un moteur pas-à-pas de mouvement d'horlogerie électronique, le moteur pas-à-pas comprenant un rotor, un stator et au moins une bobine, la bobine recevant d'un dispositif de commande associé au moteur pas-à-pas des impulsions motrices pour faire tourner ledit rotor lorsque ledit dispositif de commande est mis sous tension, ledit procédé comprenant les étapes de :

- envoyer au moteur pas-à-pas une impulsion motrice (10) ;
- déterminer la tension induite dans la bobine durant l'impulsion motrice ;
- interrompre l'impulsion motrice lorsque la détermination de la tension induite indique que la tension induite passe par un seuil de tension induite prédéterminé;
- après un délai de stabilisation mesuré à partir de la coupure de l'impulsion motrice, déterminer le flux magnétique à travers la bobine, et déterminer sur la base de la valeur de flux magnétique calculée si le moteur pas-à-pas a effectué un pas suite à l'impulsion motrice ;
- si le moteur pas-à-pas n'a pas effectué de pas, exécuter une instruction de rattrapage comprenant l'envoi par le dispositif de commande au moteur pas-à-pas d'impulsion de rattrapage ayant une énergie égale à ou plus importante que l'énergie de l'impulsion motrice.

Le procédé de l'invention permet ainsi d'interrompre chaque impulsion motrice aussitôt que l'énergie émise est réputée suffisante pour faire avancer d'un pas le moteur pas-à-pas, la détermination du moment de l'interruption de l'impulsion motrice sur la base de la tension induite par la rotation du rotor permettant à priori de s'assurer que le rotor a probablement été suffisamment tourné avant l'interruption de l'impulsion motrice pour achever son avance d'un pas avec les énergies cinétiques et magnétiques résultant de sa rotation forcée initiale.

De préférence, l'impulsion motrice est interrompue au plus tard lorsqu'un délai d'attente mesuré à partir du début de l'impulsion motrice est écoulé.

De préférence, le moteur pas-à-pas est piloté à courant constant. Le pilotage à courant constant permet de s'affranchir de la tension maximale de la pile alimentant le mouvement, en particulier le dispositif de commande, et de simplifier le calcul de la tension induite par la rotation du rotor dans la bobine, permettant ainsi de minimiser la consommation d'énergie liée à ce calcul. De plus, dans le cas d'un pilotage à courant constant, seule la mesure de la tension aux bornes de la bobine est nécessaire afin de procéder au moyennage de la tension par filtre passe-bas, comme expliqué plus loin, alors que dans le cas d'un pilotage à tension constante la mesure du courant est absolument nécessaire également.

De préférence, la détermination du flux magnétique à travers la bobine est effectuée par l'intégration de la tension induite dans la bobine durant le délai de stabilisation. L'intégration de la tension induite est réalisée de préférence par l'intégration d'une équation de la tension induite qui prend en compte le courant, la tension d'alimentation, ainsi que la résistance et l'inductance de la bobine.

De préférence, l'instruction de rattrapage comprend l'émission par le dispositif de commande vers le moteur pas-à-pas d'une impulsion de calage de polarité opposée à la polarité de l'impulsion de rattrapage pour le repositionnement du rotor dans sa position de repos, avant l'émission de l'impulsion de rattrapage.

L'impulsion de calage est de préférence suivie d'un délai de stabilisation avant l'émission de l'impulsion de rattrapage.

Selon certaines formes d'exécution préférentielles, le procédé de l'invention comprend l'ajustement de l'énergie de la prochaine impulsion motrice en fonction du nombre de pas ratés lors des impulsions motrices précédentes. De préférence, le dispositif de commande comprend un compteur qui est incrémenté ou décrémenté après chaque impulsion motrice selon que le pas a été raté ou réussi, la valeur du compteur étant indicative d'une forte proportion de pas ratés ou réussis dans les derniers pas. Si la proportion de pas ratés est importante, cela signifie probablement que les conditions de fonctionnement de la pièce d'horlogerie correspondante sont défavorables et qu'il serait probablement judicieux d'augmenter l'énergie des prochaines impulsions motrices afin d'augmenter la probabilité que les prochains pas soient réussis. A l'inverse, une proportion importante de pas réussis peut être indicative de conditions normales, voire particulièrement favorables, de fonctionnement de la pièce d'horlogerie et un signe que l'énergie des impulsions motrices peut être diminuée pour économiser encore plus l'énergie sans risque de péjorer la marche du mouvement.

De préférence, l'ajustement de l'énergie de la prochaine impulsion motrice se fait par l'ajustement de l'intensité du courant de la prochaine impulsion motrice.

De manière avantageuse, le procédé de pilotage et d'asservissement avec ajustement de l'énergie de la prochaine impulsion est utilisé, de préférence en production, pour déterminer un indicateur de qualité du mouvement intégrant le moteur pas-à-pas, en fonction de l'énergie de la prochaine impulsion motrice au terme d'un temps d'ajustement durant lequel l'énergie minimale pour la prochaine impulsion motrice est fixée à une quantité d'énergie trop faible pour permettre au moteur la réussite d'un pas et durant lequel le mouvement horloger est soumis à des conditions de fonctionnement stables et prédéterminées. Grâce au procédé de l'invention, l'énergie de l'impulsion motrice s'ajustera automatiquement à une quantité de fonctionnement permettant au moteur de réussir un pas avec une énergie minimale. Cette quantité ou valeur de fonctionnement est alors représentative de la qualité du mouvement, en particulier du moteur.

Les buts évoqués plus haut et d'autres avantages sont également atteints par un dispositif de commande d'un moteur pas-à-pas de mouvement d'horlogerie électronique, configuré pour la mise en oeuvre par le dispositif de commande du procédé décrit plus haut.

De préférence, le dispositif de commande comprend des moyens de mesure de la tension aux bornes de la bobine du moteur pas-à-pas et de préférence également du courant à travers la bobine du moteur pas-à-pas, par exemple à l'aide d'une résistance de shunt et d'un comparateur.

Le dispositif de commande comprend également de préférence un circuit d'asservissement pour vérifier si le pas a été réussi par le moteur pas-à-pas après chaque impulsion motrice et l'exécution, si le pas a été raté, d'une instruction de rattrapage comprenant l'émission d'une impulsion de rattrapage de même polarité que la dernière impulsion motrice et d'énergie égale ou supérieure à l'énergie de la dernière impulsion motrice.

La présente invention sera mieux comprise à la lecture de la description ci-dessous illustrée par les figures, où :

La figure 1 est une illustration schématique d'un dispositif de commande selon l'invention pilotant un moteur pas-à-pas pour mouvement horloger à quartz ;

La figure 2 illustre la coupure d'une impulsion motrice du dispositif de commande à destination du moteur pas-à-pas ;

La figure 3 est un diagramme illustrant un procédé de commande et d'asservissement du moteur pas-à-pas selon l'invention ;

La figure 4 est un diagramme illustrant un procédé de correction de la commande du moteur pas-à-pas par le dispositif de commande ;

La figure 5 est une représentation graphique des grandeurs physiques en jeu lors d'un pas réussi ;

La figure 6 est une représentation graphique des grandeurs physiques en jeu lors d'un pas raté.

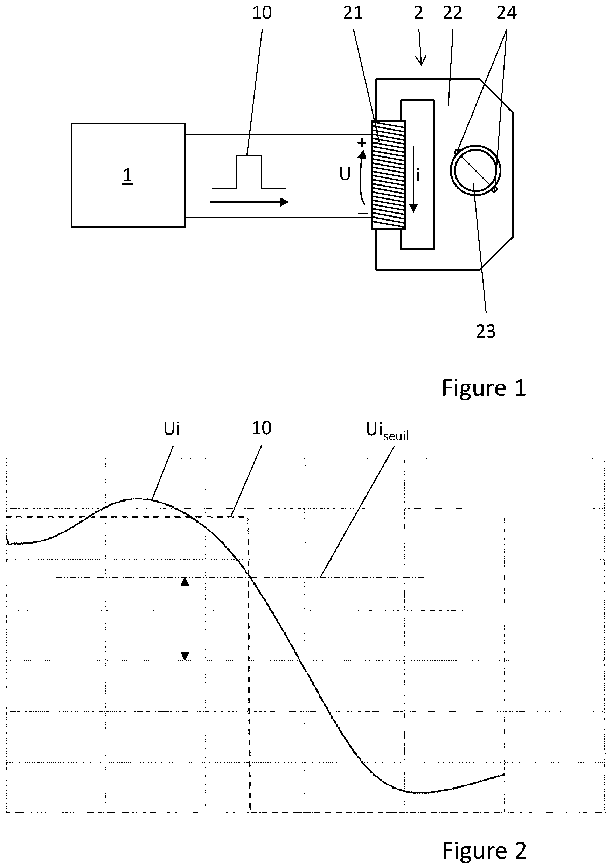

En référence à la figure 1, un mouvement à quartz pour pièce d'horlogerie à affichage analogique comprend un moteur pas-à-pas 2 pour entraîner les organes d'affichage non représentés de la pièce d'horlogerie, typiquement des aiguilles, et un dispositif de commande 1 pour commander et contrôler la marche du moteur pas-à-pas 2.

Le moteur pas-à-pas 2 est par exemple un moteur Lavet comprenant une bobine 21, un stator 22 en un matériau magnétique doux et un rotor 23 qui comporte un aimant permanent. Le rotor 23 engrène avec un rouage de finissage non représenté pour entraîner les organes d'affichage. Le rotor 23 peut adopter deux positions de repos stables par rapport au stator 22 dans lesquelles il est maintenu par la force magnétique de l'aimant permanent et qui sont déterminées par exemple par des alvéoles 24 formées dans le stator 22. Les deux positions de repos sont séparées entre elles d'un demi-tour du rotor 23, qui correspond à un pas du moteur pas-à-pas 2. Lorsqu'une impulsion électrique motrice 10 est appliquée aux bornes de la bobine 21, le champ magnétique généré par la bobine 21 est conduit par le stator 22 et fait tourner le rotor 23 d'un pas jusqu'à la prochaine position de repos. La polarité de l'impulsion motrice 10 est inversée à chaque pas, de sorte que le rotor 23 tourne normalement dans le même sens à chaque pas. En fonctionnement normal, le dispositif de commande 1 émet périodiquement une impulsion motrice 10 destinée à avancer d'un pas le moteur pas-à-pas 2. Le dispositif de commande 1 émet par exemple une impulsion motrice 10 par seconde. La rotation d'un pas du rotor 23 provoque l'avance d'un pas du rouage de finissage et des organes d'affichage, qui avancent par exemple d'une seconde à chaque pas.

D'autres types de moteurs pas-à-pas sont toutefois envisageables dans le cadre de l'invention pour entraîner les organes d'affichage, par exemple des moteurs pas-à-pas avec plusieurs bobines, par exemple deux bobines. Le nombre, la durée, l'intensité et/ou la polarité des impulsions motrices dépendent alors typiquement des caractéristiques du moteur utilisé. Selon certaines formes d'exécution, le dispositif de commande peut émettre une impulsion motrice par fraction de seconde, par exemple dans le cas d'un mouvement de chronographe.

De manière connue, le mouvement à quartz, en particulier l'oscillateur à quartz et le dispositif de commande 1, est alimenté par une pile électrique non représentée, de préférence une pile plate pouvant aisément être insérée dans un boîtier de pièce d'horlogerie, par exemple dans une boîte de montre bracelet. Selon l'invention, afin de minimiser la consommation d'énergie du mouvement et ainsi maximiser la longévité de la pile, chaque impulsion motrice 10 est interrompue lorsque l'énergie transmise à la bobine 21 est considérée comme suffisante pour avancer d'un pas le moteur pas-à-pas 2.

Selon l'invention, l'impulsion motrice 10 est interrompue lorsqu'une tension induite Ui, induite dans la bobine 21 par le rotor 23 au cours de sa rotation, passe un seuil de tension induite $Ui_{seuil}$ prédéterminé.

La valeur du seuil de tension induite $Ui_{seuil}$ est par exemple zéro volt, une tension induite Ui de zéro volt indiquant que le flux magnétique provenant du rotor 23 et traversant la bobine 21 passe par un maximum. D'autres valeurs du seuil de tension induite $Ui_{seuil}$ sont cependant envisageables dans le cadre de l'invention, déterminées par exemple en fonction du type et de la configuration du moteur pas-à-pas, des conditions de fonctionnement du mouvement, par exemple des conditions d'utilisation de la pièce d'horlogerie comprenant le mouvement, etc. Une valeur du seuil de tension induite $Ui_{seuil}$ plus basse permet typiquement de gagner en robustesse en prolongeant l'impulsion motrice 10, augmentant ainsi la probabilité que le pas s'achève correctement après la coupure de l'impulsion motrice 10. Une valeur du seuil de tension induite $Ui_{seuil}$ plus élevée permet typiquement de gagner en consommation d'énergie électrique en écourtant l'impulsion motrice 10. Selon certaines formes d'exécution, la valeur du seuil de tension induite $Ui_{seuil}$ est réglable par le dispositif de commande 1, afin par exemple de palier à un taux d'erreur trop important et/ou de revenir à une consommation d'énergie normale après une période de pilotage du moteur pas-à-pas 2 avec des impulsions motrices 10 plus longues.

De préférence, l'impulsion motrice 10 est également interrompue si la tension induite Ui ne passe pas le seuil de tension induite $Ui_{seuil}$ au terme d'un délai d'attente $\Delta t_{timeout}$ prédéterminé mesuré depuis le début de l'impulsion motrice 10. Le délai d'attente $\Delta t_{timeout}$ prédéterminé est par exemple de quinze millisecondes. D'autres valeurs du délai d'attente $\Delta t_{timeout}$ sont cependant possibles, le délai d'attente $\Delta t_{timeout}$ étant de préférence plus grand que la durée typique ou moyenne d'une impulsion motrice 10 en conditions normales de fonctionnement du mouvement.

De préférence, le dispositif de commande 1 pilote le moteur pas-à-pas 2 à courant constant, c'est-à-dire que le dispositif de commande 1 est configuré pour maintenir à une valeur cible prédéterminée l'intensité du courant transmis au moteur pas-à-pas 2 durant l'impulsion motrice 10, la tension d'alimentation étant par exemple hachée afin de générer le courant constant. Un avantage du pilotage à courant constant est que la tension de l'impulsion motrice 10 n'est pas limitée par la tension de la pile alimentant le mouvement.

Lorsque le moteur pas-à-pas 2 est piloté à courant constant, la tension U aux bornes de la bobine 21 durant l'impulsion motrice 10 est composée de l'addition d'une tension constante $R \cdot I_{const}$ due au courant constant $I_{const}$ transmis à la bobine 21 par le dispositif de commande 1, où R représente la résistance de la bobine 21, et de la tension induite Ui. La tension U aux bornes de la bobine 21 durant l'impulsion motrice 10 peut ainsi être exprimée par la formule :

$$U = R \cdot I_{const} + Ui.$$

Les valeurs de la résistance R et du courant constant $I_{const}$ étant de préférence connues du dispositif de commande 1, la tension induite Ui peut être déterminée sur la base de la tension U mesurée aux bornes de la bobine 21 selon la formule :

$$Ui = U - R \cdot I_{const}.$$

Durant l'émission de l'impulsion motrice 10, le dispositif de commande 1 mesure, par exemple périodiquement, la tension U aux bornes de la bobine 21. Pour chaque valeur de tension U mesurée, le dispositif de commande 1 calcule numériquement la tension induite Ui selon la formule énoncée plus haut. Le dispositif de commande 1 compare alors chaque valeur de tension induite Ui calculée avec la valeur de seuil de tension induite $Ui_{seuil}$. Dès que le dispositif de commande 1 détermine que la tension induite Ui a passé le seuil de tension induite $Ui_{seuil}$, par exemple dès que la valeur de la tension induite Ui est inférieure ou égale à la valeur de seuil de tension induite $Ui_{seuil}$, l'impulsion motrice 10 est interrompue, comme illustré schématiquement à la figure 2. En fonctionnement normal, à la fin de l'impulsion motrice 10 le rotor 23 aura été entraîné en rotation sur une portion de pas suffisante pour lui permettre d'achever le pas après la coupure de l'impulsion motrice 10 sous l'effet des énergies cinétiques et magnétiques résultant de sa rotation forcée hors de sa dernière position de repos.

Selon l'invention, le dispositif de commande 1 comprend un circuit d'asservissement permettant de vérifier que le moteur pas-à-pas 2 a correctement effectué un pas suite à chaque impulsion motrice 10, et d'émettre une instruction de rattrapage si ce n'est pas le cas, c'est-à-dire si le pas a été raté. De préférence, le circuit d'asservissement permet en outre de modifier au moins temporairement le niveau d'énergie des impulsions motrices 10 si une proportion importante de pas ratés est détectée, par exemple en modifiant l'intensité du courant constant $I_{const}$ des impulsions motrices 10 et/ou en modifiant la valeur du seuil de tension induite $Ui_{seuil}$ à partir duquel les impulsions motrices 10 sont interrompues.

La vérification de la réussite ou non du pas est effectuée à l'aide de la détermination du flux magnétique $\Phi$ à travers la bobine 21, au terme d'un délai de stabilisation $\Delta t_{stab}$ prédéterminé mesuré à partir de la fin de la dernière impulsion motrice 10, soit l'impulsion qui vient de se produire. La détermination du flux magnétique $\Phi$ peut être réalisée pendant tout le pas moteur, soit du début de l'impulsion motrice 10 jusqu'à la fin du délai de stabilisation $\Delta t_{stab}$. Le flux magnétique $\Phi$ est par exemple déterminé par l'intégration de la tension induite Ui mesurée aux bornes de la bobine 21. Cette tension induite est influencée par le courant et la tension d'alimentation, ainsi que par la résistance et l'inductance de la bobine 21. L'intégration du flux magnétique $\Phi$ commence de préférence au début de l'impulsion motrice 10, lorsque le rotor 23 est encore au repos. Le résultat du calcul de l'intégration est utilisé au terme du délai de stabilisation $\Delta t_{stab}$ pour comparaison avec un seuil de flux magnétique $\Phi_{seuil}$ prédéterminé. Au terme du délai de stabilisation $\Delta t_{stab}$, le courant et la tension sont généralement nuls ; le flux magnétique $\Phi$ est alors constant ce qui revient à dire que le rotor 23 est stable.

Selon une forme d'exécution, le flux magnétique $\Phi$ est calculé à partir des valeurs mesurées suivantes (en mode discret) :

$$\Phi_n = \sum_{k=1}^{n} [u_k - Ri_k]\Delta t - Li_n + \Phi_0$$

avec

$\Phi_n$    flux magnétique calculé en position n
$u_k$    tension d'alimentation (échantillon k)
$R$    résistance de bobine
$i_k$    courant dans la bobine (échantillon k)
$\Delta t$    intervalle de temps entre deux échantillons
$L$    inductance propre de bobine
$i_n$    courant dans la bobine (échantillon n, valeur à la position du calcul)
$\Phi_0$    flux magnétique initial (constante d'intégration en mode continu)

Si le flux magnétique $\Phi(t_d+\Delta t_{stab})$ au terme du délai de stabilisation $\Delta t_{stab}$ est supérieur ou égal au seuil de flux magnétique $\Phi_{seuil}$, le dispositif de commande 1 considère que le pas est réussi et le comptabilise comme tel. La prochaine impulsion motrice 10 est alors émise normalement, lorsqu'un prochain pas du mouvement est requis, typiquement à la prochaine seconde. Si le flux magnétique $\Phi(t_d+\Delta t_{stab})$ au terme du délai de stabilisation $\Delta t_{stab}$, est inférieur au seuil de flux magnétique $\Phi_{seuil}$ prédéterminé, le pas est considéré comme raté et le dispositif de commande émet une instruction de rattrapage pour répéter le pas avant que la prochaine impulsion motrice 10 ordinaire ne soit émise. La valeur seuil de flux magnétique $\Phi_{seuil}$ correspond de préférence au flux magnétique émis par l'aimant permanent du rotor 23 et traversant la bobine 21 lorsque le rotor 23 est en position de repos.

Selon une forme d'exécution, l'instruction de rattrapage comprend l'émission d'une impulsion de rattrapage de même polarité que la dernière impulsion motrice 10. De préférence, l'impulsion de rattrapage est une impulsion à plus haute énergie que l'impulsion motrice 10. L'impulsion de rattrapage est de préférence émise au courant constant $I_{const}$ maximal pouvant être généré par le dispositif de commande 1. Durant l'émission de l'impulsion de rattrapage, le dispositif de commande 1 mesure de préférence la tension U aux bornes de la bobine 21 et coupe l'impulsion de rattrapage dès que la tension induite Ui passe le seuil de tension induite $Ui_{seuil}$, comme pour toute autre impulsion motrice 10. Il est toutefois envisageable dans le cadre de l'invention de déterminer une valeur du seuil de tension induite $Ui_{seuil}$ différente lors de l'émission d'une impulsion de rattrapage.

De préférence, avant l'émission de l'impulsion de rattrapage, l'instruction de rattrapage comprend l'émission d'une impulsion de calage afin de ramener le rotor 23 dans sa position de repos. L'impulsion de calage est de préférence de polarité opposée à la polarité de l'impulsion de rattrapage. De préférence, l'impulsion de calage est émise au courant constant $I_{const}$ maximal, mais pour une durée généralement plus courte que celle d'une impulsion motrice 10 ou d'une impulsion de rattrapage. La durée de l'impulsion de calage est par exemple de 1 ms. L'impulsion de calage est de préférence suivie d'un temps de stabilisation avant l'émission de l'impulsion de rattrapage. Le temps de stabilisation après l'impulsion de calage est par exemple de 10 ms.

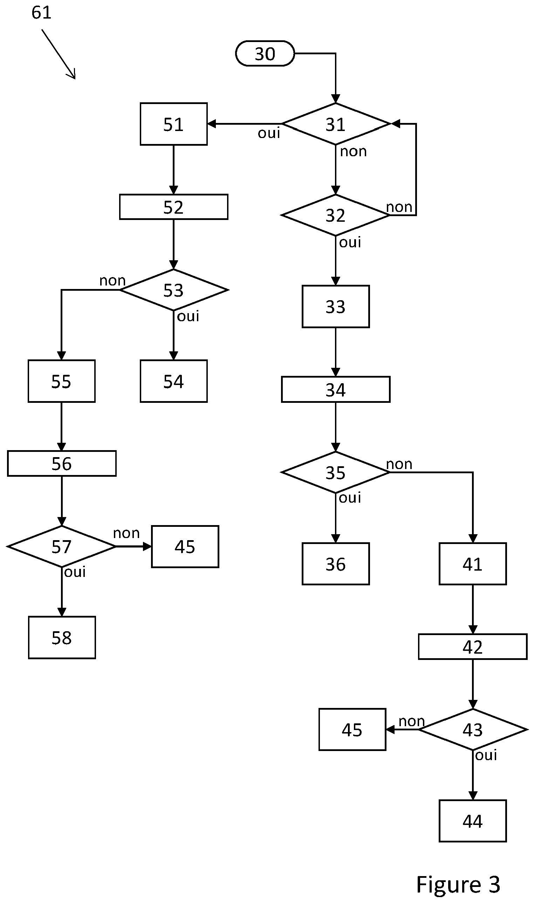

Une forme d'exécution préférentielle du procédé de pilotage et d'asservissement 61 du moteur pas-à-pas 2 par le dispositif de contrôle 1 est illustré schématiquement à la figure 3.

Dans une première étape 30, le dispositif de commande 1 initie une impulsion motrice 10 en émettant un courant constant $I_{const}$ à destination du moteur pas-à-pas 2 pour le faire avancer d'un pas.

Le dispositif de commande 1 procède ensuite à une vérification de délai d'attente 31 pour déterminer si le délai d'attente $\Delta t_{timeout}$ mesuré à partir du début de l'impulsion motrice 10, i.e. depuis la première étape 30, est écoulé ou non.

Si le délai d'attente $\Delta t_{timeout}$ n'est pas écoulé, le dispositif de commande 1 procède à une vérification de tension induite 32 pour déterminer si la tension induite Ui a passé la valeur de seuil. Selon une forme d'exécution, le dispositif de commande 1 mesure la tension U aux bornes de la bobine 21, calcule la tension induite Ui comme expliqué plus haut et vérifie si la valeur calculée est inférieure ou égale la valeur du seuil de tension induite $Ui_{seuil}$. Selon une autre forme d'exécution, le dispositif de commande 1 moyenne la tension d'alimentation au cours de l'impulsion motrice 10 par le biais d'un filtre passe-bas, la tension d'alimentation étant généralement hachée afin de générer un courant constant.

Si la tension induite Ui n'a pas passé la valeur du seuil de tension induite $Ui_{seuil}$, le dispositif revient à l'étape de vérification de délai d'attente 31.

Si la tension induite Ui a passé la valeur de seuil, alors le dispositif de commande 1 interrompt l'impulsion motrice 10 dans une étape de coupure d'alimentation 33.

Après un temps de stabilisation 34, le dispositif de commande 1 effectue une vérification de flux 35 comme expliqué plus haut, afin de déterminer si l'intensité du flux magnétique $\Phi$ à travers la bobine 21 est supérieure à la valeur du seuil de flux magnétique $\Phi_{seuil}$. Si le résultat de la vérification de flux 35 est positif, le dispositif de commande 1 considère que le pas est réussi et le comptabilise comme tel dans une dernière étape 36.

Si la vérification de flux 35 indique que l'intensité du flux magnétique à travers la bobine 21 est inférieure à la valeur du seuil de flux magnétique $\Phi_{seuil}$, ce qui indique que le rotor 23 est probablement dans une position autre que sa position de repos et que le pas n'est donc probablement pas réussi, le dispositif de commande 1 émet une instruction de rattrapage 41 telle que décrite plus haut afin de rattraper le pas raté.

Après un temps de stabilisation 42 mesuré à partir de la fin de l'instruction de rattrapage 41, par exemple trente millisecondes, le dispositif de commande 1 procède à nouveau à une vérification de flux 43 selon le principe expliqué plus haut après avoir intégré la tension induite Ui durant le temps de stabilisation 42, afin de déterminer si l'intensité du flux magnétique $\Phi$ à travers la bobine 21 est supérieure à la valeur du seuil de flux magnétique $\Phi_{seuil}$.

Si le résultat de la vérification de flux 43 est positif, dans une dernière étape 44 le dispositif de commande 1 considère que le pas est réussi mais le comptabilise comme raté.

Si le résultat de la vérification de flux 43 est négatif, dans une dernière étape 45 le dispositif de commande 1 considère que le pas est raté mais ne le comptabilise de préférence pas comme tel, la cause de ce nouvel échec étant probablement une alimentation en contre-phase du moteur pas-à-pas 2.

Si le résultat de la vérification de délai d'attente 31 indique que le délai d'attente $\Delta t_{timeout}$ est écoulé, le dispositif de commande 1 interrompt l'impulsion motrice 10 dans une étape de coupure d'alimentation 51.

Après un temps de stabilisation 52 mesuré à partir de l'interruption de l'impulsion motrice 10, le dispositif de commande 1 effectue une vérification de flux 53 comme expliqué plus haut, afin de déterminer si l'intensité du flux magnétique $\Phi$ à travers la bobine 21 est supérieure à la valeur du seuil de flux magnétique $\Phi_{seuil}$.

Si le résultat de la vérification de flux 53 est positif, dans une dernière étape 54 le dispositif de commande 1 considère que le pas est réussi et le comptabilise comme tel.

Si le résultat de la vérification de flux 53 est négatif, le dispositif de commande 1 émet une instruction de rattrapage 55.

Après un temps de stabilisation 56 mesuré à partir de la fin de l'instruction de rattrapage 55, par exemple trente millisecondes, le dispositif de commande 1 procède à nouveau à une vérification de flux 57 selon le principe expliqué plus haut après avoir intégré la tension induite Ui durant le temps de stabilisation 56, afin de déterminer si l'intensité du flux magnétique $\Phi$ à travers la bobine 21 est supérieure à la valeur du seuil de flux magnétique $\Phi_{seuil}$.

Si le résultat de la vérification de flux 57 est positif, dans une dernière étape 58 le dispositif de commande 1 considère que le pas est réussi mais le comptabilise comme raté.

Si le résultat de la vérification de flux 57 est négatif, dans une dernière étape 59 le dispositif de commande 1 considère que le pas est raté mais ne le comptabilise de préférence pas comme tel, la cause de ce nouvel échec étant probablement une alimentation en contre-phase du moteur pas-à-pas 2.

Selon l'invention, le circuit d'asservissement du dispositif de commande 1 permet de détecter les pas ratés, et de les rattraper grâce aux instructions de rattrapage, en particulier par l'émission de l'impulsion de rattrapage qu'elles comprennent. Cela permet d'assurer la précision et la fiabilité du mouvement électronique malgré des conditions de fonctionnement non idéales. Cependant, l'émission d'impulsions de rattrapage augmente la consommation d'énergie du mouvement par rapport à un fonctionnement normal. C'est pourquoi le dispositif de commande 1 est de préférence configuré pour pouvoir ajuster l'énergie des impulsions motrices 10 en fonction du nombre de pas ratés comptabilisés, dans le but d'éviter de nouveaux pas ratés et l'émission d'instructions de rattrapage.

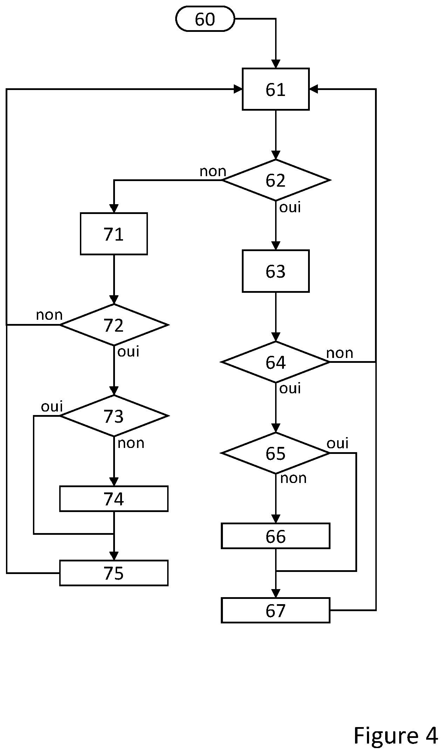

La figure 4 est un diagramme illustrant l'ajustement du niveau d'énergie des impulsions motrices 10 par le dispositif de commande 1 en fonction du nombre de pas ratés comptabilisés, selon une forme d'exécution préférentielle de l'invention.

Dans une première étape 60 effectuée par le dispositif de contrôle 1 par exemple lors d'une première mise en service du mouvement, lors d'une remise en service du mouvement après un changement de pile et/ou une opération de maintenance, un compteur destiné à comptabiliser les pas ratés est remis à une valeur nominale prédéterminée.

Le dispositif de contrôle 1 exécute alors le procédé de pilotage et d'asservissement 61 décrit plus haut en relation avec la figure 3 pour avancer le moteur pas-à-pas 2 d'un pas. Au terme du procédé de pilotage 61, le dispositif de commande 1 détermine dans une étape de détermination de pas raté 62 si le pas doit être comptabilisé comme raté ou non, selon les critères expliqués plus haut en relation avec le procédé de pilotage et d'asservissement 61.

Si le pas doit être comptabilisé comme raté, le dispositif de commande 1 incrémente le compteur d'une valeur représentative d'un pas raté dans une étape d'incrémentation 63.

Dans une étape de vérification de la valeur du compteur 64, le dispositif de commande 1 vérifie si la valeur du compteur est supérieure ou égale à une valeur de seuil indicative de la nécessité de passer à un niveau d'énergie supérieur pour l'émission des prochaines impulsions motrices 10 afin d'augmenter la probabilité que le moteur pas-à-pas 2 réussisse son ou ses prochains pas.

Si l'étape de vérification de la valeur du compteur 64 indique que la valeur du compteur n'est pas supérieure ou égale à la valeur de seuil indicative de la nécessité de passer à un niveau d'énergie supérieur, le dispositif de commande 1 retourne au procédé de pilotage et asservissement 61 pour avancer à nouveau le moteur pas-à-pas 2 d'un pas lorsque cela sera requis, avec une impulsion motrice 10 de même énergie que la précédente.

Si l'étape de vérification de la valeur du compteur 64 indique que la valeur du compteur est supérieure ou égale à la valeur de seuil indicative de la nécessité de passer à un niveau d'énergie supérieur, le dispositif de commande 1 effectue une étape de vérification de l'intensité du courant 65 pour déterminer si l'intensité du courant constant $I_{const}$ lors de la dernière impulsion motrice 10 était égale au courant constant maximal.

Si l'étape de vérification de l'intensité du courant 65 indique que l'intensité du courant constant $I_{const}$ lors de la dernière impulsion motrice 10 n'était pas égale au courant constant maximal, dans une étape d'augmentation du courant 66 la consigne de l'intensité du courant constant $I_{const}$ est augmentée d'un incrément de courant constant $\Delta I_{const}$ pour la prochaine impulsion motrice 10 et le dispositif remet le compteur à la valeur nominale dans une étape de remise du compteur à la valeur nominale 67.

Si l'étape de vérification de l'intensité du courant 65 indique que le courant constant $I_{const}$ de la dernière impulsion motrice 10 était déjà à la valeur maximale, alors le dispositif de commande 1 passe directement à l'étape de remise du compteur à la valeur nominale 67.

Le dispositif de commande 1 revient alors au procédé de pilotage et asservissement 61 pour avancer à nouveau le moteur pas-à-pas 2 d'un pas lorsque cela sera requis.

Si l'étape de détermination de pas raté 62 détermine que le pas lors du procédé de commande 61 précédent ne doit pas être comptabilisé comme raté, le dispositif de commande 1 décrémente le compteur d'une valeur représentative d'un pas réussi dans une étape de décrémentation 71.

Dans une étape de vérification de la valeur du compteur 72, le dispositif de commande 1 vérifie si la valeur du compteur est inférieure ou égale à une valeur de seuil indicative de la possibilité de diminuer le niveau d'énergie des prochaines impulsions motrices 10.

Si ce n'est pas le cas, le dispositif de commande 1 retourne au procédé de pilotage et asservissement 61 pour avancer à nouveau le moteur pas-à-pas 2 d'un pas lorsque cela sera requis, avec une impulsion motrice 10 de même énergie que la précédente.

Si l'étape de vérification de la valeur du compteur 72 indique que la valeur du compteur est inférieure ou égale à la valeur de seuil indicative de la possibilité de diminuer le niveau d'énergie des prochaines impulsions motrices 10, le dispositif de commande 1 effectue une étape de vérification de l'intensité du courant 73 pour déterminer si l'intensité du courant constant $I_{const}$ lors de la dernière impulsion motrice 10 était égale à une intensité de courant constant $I_{const}$ minimale.

Si ce n'est pas le cas, la consigne de l'intensité du courant constant $I_{const}$ est diminuée d'un incrément de courant constant $\Delta I_{const}$ pour la prochaine impulsion motrice 10 dans une étape de diminution du courant 74 et le dispositif remet le compteur à la valeur nominale dans une étape de remise du compteur à la valeur nominale 75. Si le courant constant $I_{const}$ de la dernière impulsion motrice 10 était déjà à la valeur minimale, alors le dispositif de commande 1 passe directement à l'étape de remise du compteur à la valeur nominale 75.

Le dispositif de commande 1 revient alors au procédé de pilotage et asservissement 61 pour avancer à nouveau le moteur pas-à-pas 2 d'un pas lorsque cela sera requis.

De cette manière, le dispositif de commande 1 peut adapter l'énergie des impulsions motrices 10 à la hausse ou à la baisse en modifiant par exemple l'intensité du courant constant $I_{const}$ en fonction de la fréquence de pas ratés ou réussis. La valeur représentative d'un pas raté peut être différente de la valeur représentative d'un pas réussi, afin par exemple d'offrir une pondération plus importante aux pas ratés. Le dispositif de commande 1 aura alors tendance à privilégier la probabilité de réussir un pas au détriment de l'énergie nécessaire à chaque pas. A l'inverse, une pondération plus importante des pas réussis aura tendance à rapidement ramener le dispositif de commande 1 à piloter le moteur pas-à-pas 2 à basse énergie, au risque de devoir rattraper plus fréquemment des pas ratés.

Dans l'exemple ci-dessus, la régulation de l'énergie des impulsions motrices 10 se fait par la modification de la valeur de l'intensité du courant constant $I_{const}$. D'autres moyens sont cependant envisageables dans le cadre de l'invention pour ajuster l'énergie des impulsions motrices 10, par exemple en modifiant la valeur du seuil de tension induite $Ui_{seuil}$ à partir duquel l'impulsion motrice 10 est interrompue, allongeant ou raccourcissant ainsi la durée typique d'une impulsion motrice 10.

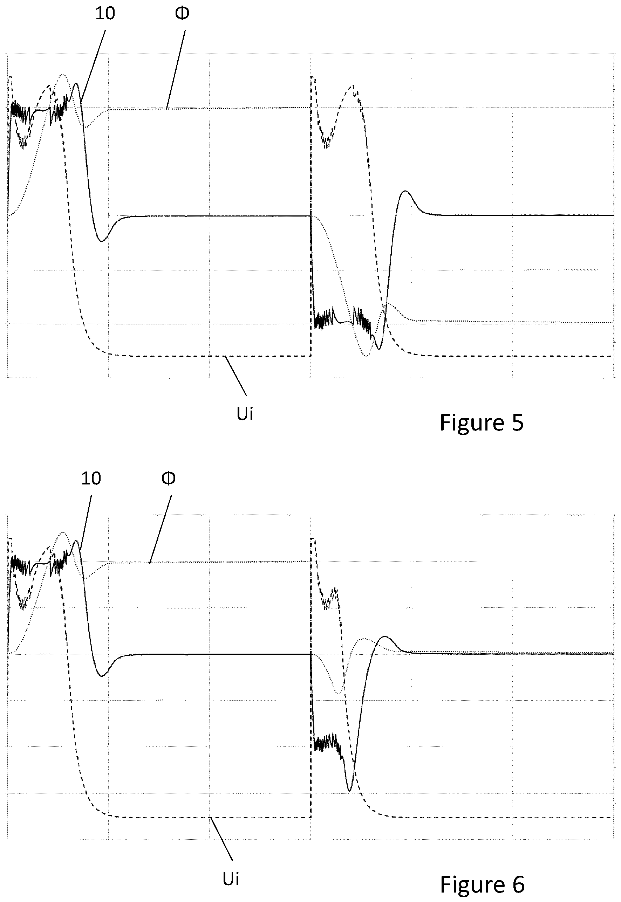

Les figures 5 et 6 représentent le courant constant $I_{const}$ lors de l'émission des impulsions motrices 10, le flux magnétique à travers la bobine 21 et la tension induite dans la bobine 21 dans le cas d'une séquence de deux pas réussis (figure 5) et dans le cas d'une séquence d'un pas réussi suivi d'un pas raté (figure 6).

De manière avantageuse, le procédé de pilotage et d'asservissement de l'invention avec ajustement de l'énergie des impulsions motrices en fonction du nombre de pas ratés est utilisé également lors de la production d'un mouvement d'horlogerie électronique comprenant le dispositif de commande 1 de l'invention afin de déterminer un indicateur de la qualité du mouvement. Après assemblage, par exemple avant son intégration dans une pièce d'horlogerie, le mouvement comprenant le dispositif de commande 1 est par exemple disposé sur un banc de test offrant au mouvement des conditions de fonctionnement stables et prédéterminées, de préférence quasi idéales. Le mouvement est par exemple disposé et/ou maintenu sur le banc de test dans une position fixe, à une température et à un degré d'humidité stables, etc. Pour l'ajustement de l'énergie des impulsions motrices, la quantité minimale de cette énergie, par exemple la valeur minimale de l'intensité de courant constant $I_{const}$, est fixée à une quantité d'énergie trop faible pour permettre au mouvement la réussite d'un pas, par exemple au seuil minimal pouvant être délivré par le dispositif de commande 1. Le pilotage du mouvement dans ces conditions avec asservissement du moteur et réglage de l'énergie des impulsions motrices en fonction du nombre de pas ratés selon l'invention aura pour effet qu'au terme d'une période d'ajustement prédéterminée suffisamment longue l'énergie des impulsions motrices se sera ajustée automatiquement, par exemple par l'ajustement de l'intensité du courant constant $I_{const}$, à une quantité ou valeur de fonctionnement permettant au mouvement la réussite du pas avec une énergie minimale. Cette valeur de fonctionnement représente un indicateur relatif à la qualité des composants et au bon fonctionnement du mouvement, en particulier du moteur.

En fonctionnement normal de la pièce d'horlogerie intégrant le mouvement, après la production de cette dernière, la valeur de fonctionnement déterminée pour le mouvement est par exemple utilisée pour fixer la quantité minimale de l'énergie des impulsions motrices pour le pilotage du mouvement avec ajustement de l'énergie des impulsions motrices selon l'invention, par exemple pour fixer la valeur minimale de l'intensité de courant constant $I_{const}$.

## Revendications

1.  Procédé de pilotage et d'asservissement d'un moteur pas-à-pas (2) de mouvement d'horlogerie électronique, le moteur pas-à-pas (2) comprenant un rotor (23), un stator (22) et au moins une bobine (21), la au moins une bobine (21) recevant d'un dispositif de commande (1) associé au moteur pas-à-pas (2) des impulsions motrices (10) pour faire tourner ledit rotor (23) lorsque ledit dispositif de commande (1) est mis sous tension, ledit procédé comprenant les étapes de :

    - envoyer au moteur pas-à-pas (2) une impulsion motrice (10) ;
    - déterminer la tension induite (Ui) dans la au moins une bobine (21) durant cette impulsion motrice (10) ;
    - interrompre l'impulsion motrice (10) lorsque la détermination de la tension induite (Ui) indique que la tension induite (Ui) passe par un seuil de tension induite ($Ui_{seuil}$) prédéterminé ;
    - après un délai de stabilisation ($\Delta t_{stab}$) mesuré à partir de la coupure de l'impulsion motrice (10), déterminer le flux magnétique ($\Phi$) à travers la au moins une bobine (21), et déterminer sur la base de la valeur de flux magnétique ($\Phi$) calculée si le moteur pas-à-pas (2) a effectué un pas suite à l'impulsion motrice (10) ;
    - si le moteur pas-à-pas (2) n'a pas effectué de pas, exécuter une instruction de rattrapage comprenant l'envoi par le dispositif de commande (1) au moteur pas-à-pas (2) d'impulsion de rattrapage ayant une énergie égale à ou plus importante que l'énergie de l'impulsion motrice (10).

**2.** Procédé selon la revendication précédente, comprenant également l'étape de :

> - interrompre l'impulsion motrice (10) lorsqu'un délai d'attente ($\Delta t_{timeout}$) mesuré à partir du début de l'impulsion motrice (10) est écoulé.

**3.** Procédé selon l'une des revendications précédentes, le moteur pas-à-pas (2) étant piloté à courant constant ($I_{const}$).

**4.** Procédé selon l'une des revendications précédentes, la détermination du flux magnétique ($\Phi$) à travers la au moins une bobine (21) étant effectuée par intégration de la tension induite (Ui) aux bornes de la au moins une bobine (21) durant le délai de stabilisation ($\Delta t_{stab}$).

**5.** Procédé selon la revendication précédente, l'intégration de la tension induite (Ui) étant calculée par l'intégration d'une équation de la tension induite (Ui) prenant en compte le courant et la tension d'alimentation, ainsi que la résistance et l'inductance de la bobine.

**6.** Procédé selon l'une des revendications précédentes, l'instruction de rattrapage comprenant l'émission par le dispositif de commande (1) vers le moteur pas-à-pas (2) d'une impulsion de calage de polarité opposée à la polarité de l'impulsion de rattrapage avant l'émission de l'impulsion de rattrapage.

**7.** Procédé selon la revendication précédente, l'impulsion de calage étant suivie d'un délai de stabilisation avant l'émission de l'impulsion de rattrapage.

**8.** Procédé selon l'une des revendications précédentes, comprenant l'ajustement de l'énergie de la prochaine impulsion motrice en fonction du nombre de pas ratés lors des impulsions motrices précédentes.

**9.** Procédé selon la revendication précédente, l'ajustement de l'énergie de la prochaine impulsion motrice se faisant par l'ajustement de l'intensité du courant ($I_{const}$) de la prochaine impulsion motrice.

**10.** Procédé selon l'une des revendications 8 et 9, un indicateur de qualité d'un mouvement horloger comprenant le moteur pas-à-pas étant déterminé en fonction de l'énergie de la prochaine impulsion motrice au terme d'un temps d'ajustement durant lequel une énergie minimale pour la prochaine impulsion motrice est fixée à une quantité d'énergie trop faible pour permettre au moteur la réussite d'un pas et durant lequel le mouvement horloger est soumis à des conditions de fonctionnement stables et prédéterminées.

**11.** Dispositif de commande (1) d'un moteur pas-à-pas (2) de mouvement d'horlogerie électronique, configuré pour la mise en oeuvre du procédé selon l'une des revendications précédentes par le dispositif de commande (1).

**12.** Dispositif de commande (1) selon la revendication précédente, comprenant des moyens de mesure de la tension (U) aux bornes de la au moins une bobine (21) du moteur pas-à-pas.

**13.** Dispositif de commande selon l'une des revendications 11 et 12, comprenant des moyens de mesure du courant (I) au travers de la au moins une bobine (21) du moteur pas-à-pas.

**14.** Dispositif de commande (1) selon l'une des revendications 11 à 13, comprenant un circuit d'asservissement pour vérifier si le pas a été réussi par le moteur pas-à-pas (2) après chaque impulsion motrice (10) et l'exécution, si le pas a été raté, d'une instruction de rattrapage comprenant l'émission d'une impulsion de rattrapage de même polarité que la dernière impulsion motrice (10) et d'énergie supérieure ou égale à l'énergie de la dernière impulsion motrice (10).

Figure 1

Figure 2

Figure 3

Figure 4

10    Φ

Ui                                    Figure 5

10    Φ

Ui                                    Figure 6

Europäisches
Patentamt

European
Patent Office

Office européen
des brevets

**RAPPORT DE RECHERCHE EUROPEENNE**

Numéro de la demande

EP 24 16 2979

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2011/026375 A1 (MANAKA SABURO [JP] ET AL) 3 février 2011 (2011-02-03) | 1-5,8-14 | INV. H02P8/02 |
| Y | * abrégé; revendications 1-19; figures 1-3 * * le document en entier * | 6,7 | H02P8/16 H02P8/34 H02P8/38 G04C3/14 |
| | ----- | | |
| Y | EP 0 108 711 B1 (EBAUCHESFABRIK ETA AG [CH]) 10 juin 1987 (1987-06-10) * abrégé; revendications 1-2; figure 5 * | 6,7 | |
| | ----- | | |
| A | FR 2 489 055 A1 (EBAUCHESFABRIK ETA AG [CH]) 26 février 1982 (1982-02-26) * abrégé * * page 6 * | 4,5 | |
| | ----- | | |
| A | EP 2 040 134 B1 (CITIZEN WATCH CO LTD [JP]) 1 août 2018 (2018-08-01) * abrégé; revendication 1; figure 11 * * alinéa [0026]; figures 10, 17-20 * * alinéa [0019] - alinéa [0020] * | 1-14 | |
| | ----- | | |
| A | EP 3 349 073 A1 (CITIZEN WATCH CO LTD [JP]) 18 juillet 2018 (2018-07-18) * abrégé; revendication 1 * * alinéa [0301] - alinéa [0314]; figures 26-28 * | 1-14 | DOMAINES TECHNIQUES RECHERCHES (IPC) H02P G04C |
| | ----- | | |

Le présent rapport a été établi pour toutes les revendications

| Lieu de la recherche | Date d'achèvement de la recherche | Examinateur |
|---|---|---|
| Munich | 26 août 2024 | Koteich, Mohamad |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 24 16 2979

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-08-2024

| Document brevet cité au rapport de recherche | | | Date de publication | Membre(s) de la famille de brevet(s) | | Date de publication |
|---|---|---|---|---|---|---|
| US | 2011026375 | A1 | 03-02-2011 | HK | 1143665 A1 | 07-01-2011 |
| | | | | JP | 5363269 B2 | 11-12-2013 |
| | | | | JP | 2010169656 A | 05-08-2010 |
| | | | | US | 2011026375 A1 | 03-02-2011 |
| EP | 0108711 | B1 | 10-06-1987 | CH | 649187G A3 | 15-05-1985 |
| | | | | EP | 0108711 A1 | 16-05-1984 |
| | | | | JP | H0116119 B2 | 22-03-1989 |
| | | | | JP | S5989596 A | 23-05-1984 |
| | | | | US | 4507599 A | 26-03-1985 |
| FR | 2489055 | A1 | 26-02-1982 | CH | 640999G A3 | 15-02-1984 |
| | | | | DE | 3132304 A1 | 27-05-1982 |
| | | | | FR | 2489055 A1 | 26-02-1982 |
| | | | | GB | 2082806 A | 10-03-1982 |
| | | | | JP | H0371672 B2 | 14-11-1991 |
| | | | | JP | S57172279 A | 23-10-1982 |
| | | | | US | 4430007 A | 07-02-1984 |
| EP | 2040134 | B1 | 01-08-2018 | CN | 101484853 A | 15-07-2009 |
| | | | | EP | 2040134 A1 | 25-03-2009 |
| | | | | JP | 5065268 B2 | 31-10-2012 |
| | | | | JP | WO2008004605 A1 | 03-12-2009 |
| | | | | US | 2009238044 A1 | 24-09-2009 |
| | | | | WO | 2008004605 A1 | 10-01-2008 |
| EP | 3349073 | A1 | 18-07-2018 | CN | 108027585 A | 11-05-2018 |
| | | | | EP | 3349073 A1 | 18-07-2018 |
| | | | | HK | 1254715 A1 | 26-07-2019 |
| | | | | JP | 6739438 B2 | 12-08-2020 |
| | | | | JP | WO2017043629 A1 | 28-06-2018 |
| | | | | US | 2018246471 A1 | 30-08-2018 |
| | | | | US | 2020019124 A1 | 16-01-2020 |
| | | | | WO | 2017043629 A1 | 16-03-2017 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1032118 A1
- EP 0135104 A1
- EP 0024737 A1
- EP 0021320 A1
- EP 0140089 A1
- EP 0057663 A1
- CH 640999 G
- CH 647129G A3